# EUROPÄISCHE PATENTSCHRIFT

(11) **EP 2 629 603 B1**
(45) Veröffentlichungstag und Bekanntmachung des Hinweises auf die Patenterteilung: **23.07.2014**
(21) Anmeldenummer: 11813659.7
(22) Anmeldetag: 18.09.2011
(51) Int. Cl.: E02B 3/04, A01K 61/00

(54) **KÜNSTLICHES HABITAT IN POLYEDERFORM FÜR KREBSTIERE UND ANWENDUNG**
ARTIFICAL HABITAT IN POLYHEDRON FORM FOR CRUSTACEANS, AND USE
HABITAT ARTIFICIEL EN FORME DE POLYÈDRE DESTINÉ À DES CRUSTACÉS ET UTILISATION DUDIT HABITAT

(30) Priorität: 18.10.2010 DE 102010049049
(43) Veröffentlichungstag der Anmeldung: 28.08.2013
(73) Patentinhaber: Alfred-Wegener-Institut Helmholtz-Zentrum für Polar- und Meeresforschung, 27570 Bremerhaven (DE)
(72) Erfinder: KRONE, Roland, 28203 Bremen (DE)
(86) Internationale Anmeldenummer: PCT/DE2011/001769
(87) Internationale Veröffentlichungsnummer: WO 2012/051984

(56) Entgegenhaltungen:
- JP-A- 60 037 313
- KR-B1- 100 696 868
- KR-B1- 100 981 259
- US-A- 4 449 479
- US-A- 5 908 265

## Beschreibung

Die Erfindung bezieht sich auf ein künstliches Habitat in Polyederform für Krebstiere auf aquatischen Weichböden mit einer eigenständigen Standfähigkeit und strukturierten Oberflächen und auf Anwendungen des künstlichen Habitats, wobei das künstliche Habitat einen symmetrischen Vollkörper in Tetraederform mit vier gleichen, jeweils eine mögliche Standfläche auf dem Weichboden bildenden Seiten aufweist.

Hummer und andere Krebstiere sind prinzipiell Hartbodentiere, die aber auch auf Weichböden siedeln, wenn sie geeignete Habitate vorfinden. Unter Weichböden sind beispielsweise Sand- oder Kiesböden mit der Bezeichnung "weich" im Sinne von kleinteilig zu verstehen, im Gegensatz zu einstückigen Böden aus Stein oder Beton. Auf Weichböden bevorzugen Krebstiere dann allerdings harte Bauelemente, beispielsweise Stahlplatten oder Betonklötze, unter denen sie sich im aquatischen Weichboden ihre Höhlungen nach eigenem Belieben ausbauen können. Zu diesem Zweck wird den Krebstieren auf Weichböden eine Reihe von künstlichen Habitaten unterschiedlichster Ausführungsformen, die auch in stark unterschiedlichem Maße von den Tieren angenommen werden, angeboten. Künstliche Habitate, auch künstliche Riffe genannt, erfüllen aber noch weitere Funktionen. Zum einen dienen sie dem Erosionsschutz des weichen Bodens, zum anderen verhindern sie als Fischereisperren unerlaubtes Fischen. Insbesondere Schleppnetze bleiben an den künstlichen Riffen hängen und werden zerstört. Bekannte Fischereisperren werden beispielsweise aus großformatigen Panzersperren aus Stahl gebaut, die auch von bestimmten Großtieren aufgesucht werden, aber keine geeigneten Hummersiedlungsplätze darstellen.

### STAND DER TECHNIK

Polyederförmige künstliche Habitate sind aus verschiedenen Druckschriften bekannt. In der US 5 860 392 wird ein Habitat nach Art eines dreistrahligen Sterns offenbart, in dessen Flanken sich Durchgangsöffnungen befinden. Der Stern wird auf einer unstrukturierten Bodenplatte auf den Untergrund aufgesetzt, unter die bei einem Weichboden auch Krebstiere schlüpfen können. Allerdings müssen sie anfangen, ihre Höhlung an dem durchgängig geschlossenen Übergang zwischen Boden und Platte zu graben, sodass sich keine Vorzugsstelle ergibt. In der US 4 388 019 wird ein Habitat in der Form eines dreieckigen Giebels beschrieben, das aus einem röhrenförmigen Geflecht besteht. Beim Aufsetzen auf den Boden ergibt sich zum Boden eine diffuse, äußerst kleinteilige Strukturierung ohne größere Flächen, sodass dieses Habitat für Krebstiere nicht besonders interessant ist. Aus der US 3 929 100 sind röhrenförmige Elemente für ein künstliches Habitat bekannt, die in ihren Oberflächen rinnenförmige Vertiefungen aufweisen. Diese dienen aber nur der Schichtung aufeinander. Aus der US 5 071 285 ist ein künstliches Habitat aus einer Vielzahl übereinander gestapelter gelochter Platten bekannt, bei dem die unterste Platte plan auf dem Boden aufliegt. Diese ist aber unstrukturiert, sodass Krebstiere ihre Höhlungen ebenfalls an dem geschlossenen Übergang zwischen Platte und Boden beginnen müssen und keinen initialen Auslöser zum Höhlenbau haben.

Weiterhin ist aus der US 6 186 702 B1 ein künstliches Habitat bekannt, das aus drei Seitenwänden besteht, die unter einem Winkel zueinander angestellt sind und an ihren oberen Seiten an eine dreieckige Abschlussplatte angrenzen. Unten ist das Habitat offen. Die Standfläche wird von den Stirnseiten der drei Wände gebildet. In den Seitenwänden befinden sich Durchgangsöffnungen, die das Durchschlüpfen von aquatischen Tieren ermöglichen sollen, selbst aber nicht als Siedlungshöhlen dienen. Insgesamt bietet das Habitat durch seine völlig onene Form einen großen Freiraum an, der wunschgemäß einen geringen Strömungswiderstand darstellt. Es liegen aber keine geschlossenen Flächen auf dem Gewässerboden auf, sodass insbesondere Höhlenbewohner das Habitat daher nicht bevorzugt aufsuchen. Alle genannten künstlichen Riffe bieten komplett ausgeformte Höhlungen an, die aber von Krebstieren, die den Kontakt zum aquatischen Weichboden bevorzugen, nicht so gerne angenommen werden.

Der nächstliegende Stand der Technik, von dem die vorliegende Erfindung ausgeht, wird in der US 5 908 265 A beschrieben. Hieraus ist ein gattungsgemäßes künstliches Habitat in Polyederform für Krebstiere auf aquatischen Weichböden mit einer eigenständigen Standfähigkeit und strukturierten Oberflächen bekannt, wobei die Strukturen in den Oberflächen aus einander gegenüberliegenden zylindrischen Grundbohrungen bestehen, in die die Greifer eines Absetzwerkzeuges eingreifen können. Weiterhin weist das künstliche Habitat einen symmetrischen Vollkörper in Tetraederform mit vier gleichen, jeweils eine mögliche Standfläche auf dem Weichboden bildenden Seiten auf. Jeder Vollkörper wird mittels des Absetzwerkzeuges in das Wasser eingebracht und oberhalb des Grundes losgelassen, sodass sich die Vollkörper in zufälliger Weise auf dem Grund und aufeinander anordnen können.

Weiterhin ist aus der US 5 080 526 noch ein vollständig symmetrischer Tetraeder bekannt, der dem Erosionsschutz weicher Sandböden in Gewässern dient und mit einer beliebigen Seite auf dem Sandboden aufliegen kann. Dabei besteht der Tetraeder aus einem Rahmen mit massiven Streben, die von den Ecken und den Seitenhälften des Tetraeders aus in den Schwerpunkt des Tetraeders verlaufen und dort einen gemeinsamen Schnittpunkt haben. Dadurch ist der Tetraeder zwar stabil, aber ebenfalls völlig durchlässig und bildet kein interessantes Habitat für Höhlen bewohnende Krebstiere, sondern eher für Muscheln und dergleichen.

### AUFGABENSTELLUNG

Ausgehend von dem zuvor beschriebenen, gattungsgemäßen künstlichen Habitat in Polyederform für Krebstiere auf aquatischen Weichböden ist die AUFGABE für die vorliegende Erfindung darin zu sehen, ein künstliches Habitat anzugeben, das besonders für Höhlen bewohnende Krebstiere attraktiv ist. Dabei soll das Habitat jedoch einfach aufgebaut und handhabbar sein. Eine optionale Zusatzfunktion als Fischereisperre ist wünschenswert. Die erfindungsgemäße LÖSUNG für diese Aufgabe ist dem Hauptanspruch zu entnehmen. Vorteilhafte Weiterbildungen der Erfindung werden in den Unteransprüchen aufgezeigt und im Folgenden im Zusammenhang mit der Erfindung näher erläutert.

Auch das erfindungsgemäße künstliche Habitat besteht aus einem symmetrischen Vollkörper in Tetraederform mit vier gleichen Seiten. Dabei stellt die Tetraederform eine besonders kompakte, flächenminimierte geometrische Struktur mit einem hohen Symmetriegrad dar. Jede der vier Seiten bildet eine eigenständige Standfläche aus, auf der der Tetraeder liegen kann. Der Tetraeder kann also einfach in das Wasser abgelassen werden, es ist sichergestellt, dass er immer mit einer Seite auf dem weichen Gewässerboden aufliegt. Jede Seite ist in identischer Weise in ihrer Oberfläche strukturiert, sodass sich zuverlässig immer eine bekannte Oberflächenstrukturierung im Kontakt zum Weichboden befindet. Aufgrund der Form des erfindungsgemäßen künstlichen Habitats kann es treffend als "Hummerprisma" oder "CrestPrisma" bezeichnet werden. Von besonderem Vorteil ist die einfache und preisgünstige Produzierbarkeit des Hummerprismas aufgrund der einfachen Gestaltung. Es kann beispielsweise mit wieder verwendbaren Formen aus Beton gegossen werden. Ein weiterer großer Vorteil des Hummerprismas nach der Erfindung besteht in seiner Attraktivität für unterschiedliche aquatische Bewohner. Zum einen können sich Krebse in einfach Weise unter das Hummerprisma graben und dort hausen, zum anderen können Krebse, die Erhöhungen als Sitz- und Haltemöglichkeiten suchen, das Hummerprisma gut erklettern und besetzen.

Die Oberflächenstrukturierung des Hummerprismas wird erfindungsgemäß von drei rinnenförmigen Hauptgängen mit einem Verlauf entlang der Seitenhalbierenden von der Seitenkante bis zu einem gemeinsamen Schnittpunkt im Seitenschwerpunkt gebildet. Die Hauptgänge bilden damit einen dreistrahligen Stern auf jeder Seite des Tetraeders. Beim Aufliegen einer der vier Seiten des Tetraeders auf dem aquatischen Weichboden bilden die rinnenförmigen Hauptgänge nun vorgeformte Höhlungen an, die von den Krebstieren eingenommen und in den Weichboden erweitert werden können und - aufgrund der Größe der Vorformungen - für viele Krebsarten auch müssen. Jeder Hauptgang beginnt an einer Seitenkante des Tetraeders und ist im aufliegenden Zustand des Vollkörpers je nach Eindringtiefe in den Weichboden als Einstiegsmöglichkeit zugänglich. Gegenüber einfachen Steinschüttungen, in denen sich Hummer unter die Steine graben, bietet das erfindungsgemäße Habitat also Einstiegsmöglichkeiten für die Krebstiere an, die gerne angenommen werden. Insbesondere die eigenständige, selbstbestimmte Erweiterungsmöglichkeit der angebotenen Vorhöhlen durch den Bodenkontakt ist dabei besonders attraktiv für die Krebstiere.

Im Seitenschwerpunkt bilden alle drei Hauptgänge einen Schnittpunkt, sodass sich ein verzweigtes Gangsystem bildet, durch das die Krebstiere beliebig eindringen, aber auch flüchten können. Durch die Ausbildung des Polyeders als Vollkörper bieten sich den Krebstieren aber auch genügend geschlossene Flächen an, unter die sie die Höhlungen erweitern können. Das erfindungsgemäße künstliche Habitat ist also in besonderer Weise an die Habitatansprüche von Krebstieren, insbesondere Hummer, angepasst. Gleichzeitig wird durch den Vollkörper ein relativ massives Element zur Verfügung gestellt, das mit seiner in den Wasserkörper hineinragenden Spitze und den relativ scharfen Seitenkanten ein effektives Hindernis für Fangnetze darstellt, sodass das künstliche Habitat nach der Erfindung gleichzeitig als wirkungsvolle Fischereisperre wirken kann.

Haben die Hauptgänge bevorzugt vorteilhaft einen gerundeten Querschnitt, beispielsweise in der Ausführungsform eines Halbkreises, eignen sie sich besonders gut als Gänge für die Krebstiere, da diese nicht an Versprüngen oder Ecken hängen bleiben können. Außerdem lassen sich gerundete Rinnen in einem Vollmaterial besonders einfach herstellen, beispielsweise durch Gießen oder Fräsen. Dabei ergibt sich ein gutes Verhältnis zwischen Gang und Vollfläche, wenn die Hauptgänge eine Breite in einem Bereich von einem Viertel bis einem Fünftel der Länge jeder Seitenkante aufweisen. Gerade auch die Vollflächen, die auf dem weichen Gewässerboden aufliegen, bilden eine große Attraktivität für die Krebstiere. Weiterhin können diese relativ großen Vollflächen einen guten Kolkschutz bilden. Der darunter liegende aquatische Weichboden wird in einfacher Weise vor Ausspülungen (Auskolkungen) und Abtragungen geschützt. Das Hummerprisma nach der Erfindung kann damit in einer bevorzugten Anwendung auch einen wertvollen Kolkschutzbestandteil darstellen.

Weiterhin kann bei dem künstlichen Habitat nach der Erfindung vorteilhaft eine halbschalenförmige Vertiefung im Bereich des Schnittpunkts auf jeder Seite vorgesehen sein. Die sich kreuzenden Gänge bieten so entweder eine bereits vorgefertigte größere Höhlung für ein größeres Krebstier, beispielsweise einen Hummer, oder eine Ausweichmöglichkeit für sich begegnende Tiere. Auch können die Schnittpunkte der vier Seiten durch das Innere des Vollköpers hindurch mit Gängen verbunden sein. Bevorzugt kann das künstliche Habitat nach der Erfindung daher tunnelartige Verbindungsgänge im Inneren des Vollkörpers zwischen den Schnittpunkten auf den vier Seiten und dem Schwerpunkt des Vollkörpers aufweisen. Es bildet sich ein dreidimensionales Gangsystem, das zwar keinen Bodenkontakt mehr hat und damit nicht zu größeren Höhlungen ausgebaut werden kann, durchaus aber seine Attraktivität für kleinere Krebstiere aufweist. Beispielsweise ist durch das dreidimensionale Gangsystem eine noch besserere Flucht vor Fressfeinden in den Wasserkörper hinein möglich. Insbesondere Hummer legen in ihren Höhlungen grundsätzlich Hinterausgänge an, die in Gefahrensituationen genutzt werden können. Weiterhin hat diese teilweise Aushöhlung des Hummerprismas durch die verbindenden Innengänge den Vorteil, dass weniger Material, beispielsweise Beton, eingesetzt werden muss. Neben der Kostenersparnis ergibt sich aufgrund der Materialreduzierung und damit Gewichtseinsparung auch eine Erleichterung in der Handhabung des Hummerprismas nach der Erfindung, beispielsweise wenn es einfach von Bord eines Schiffes abgeworfen wird.

Für kleinere, acrophile, d.h. Oberflächen liebende Krebstiere ist es zum Wohnen und Aufhalten auch vorteilhaft, wenn rinnenförmige Nebengänge in den Oberflächen der vier Seiten mit einer geringeren Breite als die Hauptgänge vorgesehen sind. Dadurch wird die Oberfläche auf jeder Seite weiter strukturiert, die Größe der Vollflächen aber nicht wesentlich verringert. Auch die Nebengänge können Vertiefungen als Vorhöhlen oder Ausweichmöglichkeiten aufweisen. Insgesamt ist der Strukturierung der Oberflächen bei dem künstlichen Habitat nach der Erfindung keine Grenze gesetzt, vielmehr hängt sie von den gesamten Abmessungen des Tetraeders ab. Dabei können Tetraeder von einer Größe, die leicht per Hand zu bewegen ist, bis hin zu einer Größe, die nurmehr mit dem Kran oder anderem schweren Hebezeug bewältigbar ist, eingesetzt werden.

Das künstliche Habitat nach der Erfindung in Form eines tetraedrischen Vollköpers, beispielsweise aus stahlarmiertem oder faserverstärktem Beton, wird je nach Größe von Bord eines Schiffes oder einer feststehenden aquatischen Einrichtung abgeworfen oder an einem Seil abgelassen. Zur Vermeidung von Beschädigungen beim Aufsetzen auf dem Grund, beispielsweise bei einer Fertigung aus Leichtbeton, ist es vorteilhaft, wenn die Seitenkanten jeweils eine Fase aufweisen. Alternativ dazu oder abschnittsweise zusätzlich zu der Fase kann das künstliche Habitat nach der Erfindung aber auch besonders gut als Fischereisperre arbeiten, wenn die Seitenkanten, vor allem an den Eckverbindungen, vollständig oder abschnittsweise mit einer Metallkante als scharfem Kantenschutz versehen sind, die hängen bleibende Netze einfach zerschneiden. Schließlich können das Absenken mit dem Kran, das Markieren des Habitats mit einer Oberflächenboje oder auch das Verwenden des Habitats als Bodenanker in besonders einfacher Weise erfolgen, wenn an einer Ecke des Vollkörpers eine Öse vorgesehen ist, in die ein Seil einbringbar ist. Weitere Ausführungsdetails der Vorrichtung nach der Erfindung sind den nachfolgenden beschriebenen Ausführungsbeispielen zu entnehmen.

### AUSFÜHRUNGSBEISPIELE

Das künstliche Habitat in Polyederform für Krebstiere ("Hummerprisma") auf aquatischen Weichböden mit einer eigenständigen Standfähigkeit und strukturierten Oberflächen nach der Erfindung wird im Folgenden anhand der schematischen, nicht maßstabsgerechten Figuren noch weitergehend erläutert.
Dabei zeigt die
- **FIGUR 1**: eine perspektivische Ansicht des künstlichen Habitats,
- **FIGUR 2**: einen Schnitt durch das künstliche Habitat gemäß **AAA** in **FIGUR 1** und
- **Figur 3**: eine Seitenansicht auf das künstliche Habitat.

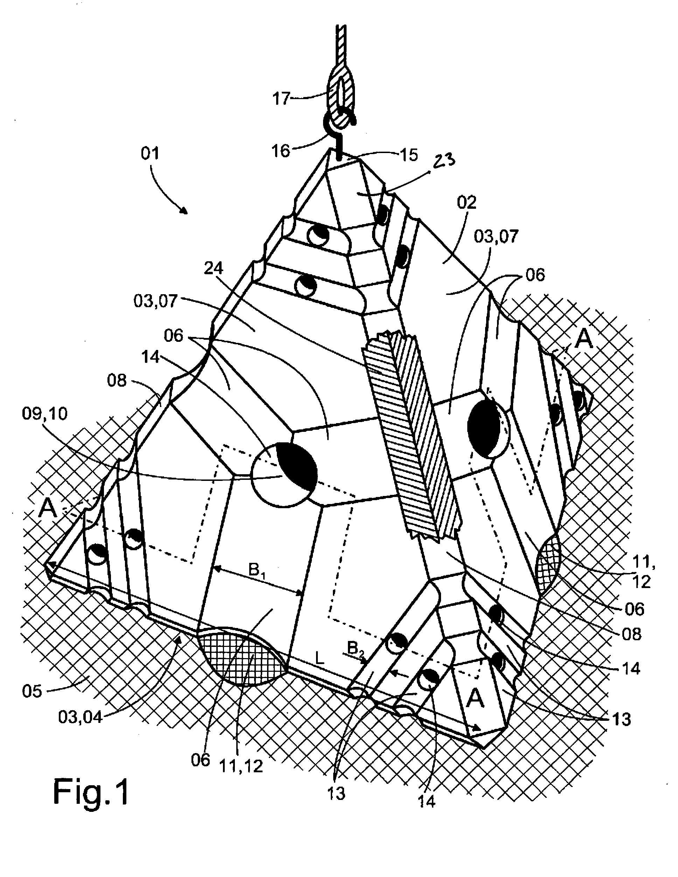

In der **FIGUR 1** ist eine perspektivische Ansicht eines künstlichen Habitats **01** in der Ausbildung eines symmetrischen Vollkörpers **02** in Tetraederform nach der Erfindung aufgezeigt. Dargestellt sind vier gleiche Seiten **03,** die jeweils eine mögliche Standfläche **04** des Vollkörpers **02** auf einem aquatischen Weichboden **05** bilden können. In die Oberflächen **07** der Seiten **03** sind drei rinnenförmige Hauptgänge **06** eingearbeitet. Diese verlaufen entlang der Seiten-halbierenden einer Seite **03** von der Seitenkante **08** bis zu einem gemeinsamen Schnittpunkt **09,** der mit dem Seitenschwerpunkt **10** übereinstimmt. Die rinnenförmigen Hauptgänge **06** bilden im Bereich der Seitenkanten **08,** die die Standfläche **04** umgeben und daher auch auf bzw. teilweise in dem aquatischen Weichboden **05** liegen, Einstiegshilfen **11** für Höhlen bewohnende Krebstiere, die Hartbodentiere sind. Die Krebse können die Einstiegshilfen **11** zu Höhlungen **12** beliebig erweitern. Die Hauptgänge **06** haben jeweils eine Breite **B₁,** die im gewählten Ausführungsbeispiel im Bereich von einem Fünftel der Länge **L** der Seitenkanten **08** liegt.

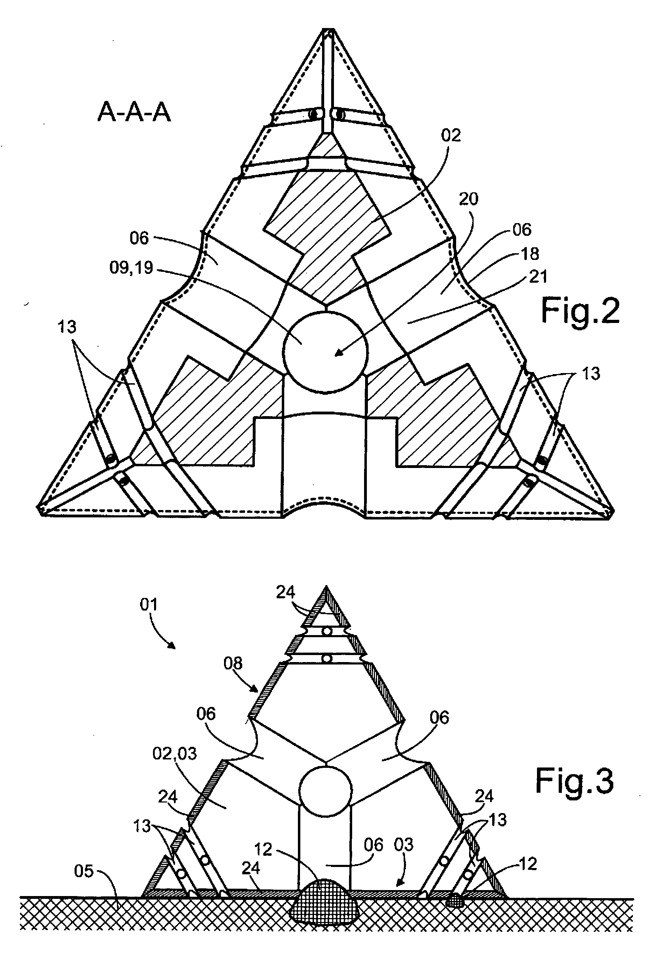

Weiterhin sind schmalere Nebengänge **13** für kleinere Krebstiere oder andere im Wasser lebende Tiere dargestellt. Dabei ist die Breite **B₂** der Nebengänge **13** geringer als die Breite **B₁** der Hauptgänge **06.** Sowohl im Schnittpunkt **09** als auch im Bereich der Nebengänge **13** sind im gewählten Ausführungsbeispiel Vertiefungen **14** vorgesehen, die die Krebstiere zusätzlich nutzen können. Die Seitenkanten **08** des Vollkörpers **02** können alternativ Fasen **23** zum Schutz vor Beschädigungen aufweisen, oder mit Metallkanten **24** (siehe **FIGUR 3**) versehen sein, die eventuell festhakende Netze zerschneiden können, wodurch die künstlichen Habitate **01** als wirksame Fischereisperre dienen. Weiterhin ist an der oberen Ecke **15** des auf dem Weichboden **05** aufliegenden Vollkörpers **02** eine Öse **16** angeordnet, in die eine Leine **17** eingreift. Diese Leine **17** kann beispielsweise dem Absenken des Vollkörpers **02** oder der Befestigung einer Oberflächenboje dienen.

Die **FIGUR** 2 zeigt einen Schnitt entlang **AAA** durch den Vollkörper **02** gemäß **FIGUR 1****.** Zu erkennen ist, dass die Hauptgänge **06** und die Nebengänge **13** im gewählten Ausführungsbeispiel einen gerundeten Querschnitt **18** aufweisen. Weiterhin sind tunnelartige Verbindungsgänge **19** im Inneren des Vollkörpers **02** zwischen den Schnittpunkten **09** der Hauptgänge **06** dargestellt, die sich im Schwerpunkt **20** des Vollkörpers **02** schneiden, sodass sich ein Tunnelsystem **21** im Inneren des Vollkörpers **02** ergibt.

Die **FIGUR 3** zeigt eine Seitenansicht auf das künstliche Habitat **01,** wie es mit einer beliebigen der vier identischen Seiten **03** des Vollkörpers **02** auf dem aquatischen Weichboden **05** liegt. Die rinnenförmigen Hauptgänge **06** der auf dem Weichboden **05** liegenden Seite **03** können von den Krebstieren zu Höhlungen **12** erweitert werden. Gleiches gilt für die rinnenförmigen Nebengänge **13.** Die Seitenkanten **08** des Vollkörpers **02** sind im gezeigten Ausführungsbeispiel zum Schutz vor Beschädigungen beim Ablassen mit durchgängigen Metallkanten **24** versehen. Zusätzlich haben diese Metallkanten **24,** insbesondere auch in den Eckbereichen der Seitenkanten **08** den großen Vorteil, dass sie eventuell festhakende Netze zerschneiden können, wodurch die künstlichen Habitate **01** zusätzlich als wirksame Fischereisperre dienen können.

Durch die genannten Maßnahmen nach der Erfindung stellt der Vollkörper **02** in Tetraederform ein besonders attraktives künstliches Habitat **01** für Krebstiere dar. Diese siedeln normalerweise auf einem Hartboden, nehmen das Habitat **01** aber auch gerne auf einem Weichboden **05** an, weil sich ihnen Hauptgänge **06** und Nebengänge **13** als Einstiegshilfen **11** und vorgeformte Höhlungen und ausreichend große Oberflächen **07** in den Seiten **03** des Vollkörpers **02** bieten, die sie für den Bau ihrer größeren Höhlungen **12** bevorzugt nutzen können. Dabei stellen diese Oberflächen **07** gleichzeitig aber auch einen wirksamen Kolkschutz gegen Ausspülungen des aquatischen Weichbodens **05** dar.

Das künstliche Habitat **01** nach der Erfindung für Krebstiere auf aquatischen Weichböden ("Hummerprisma", "CrestPrisma") kann damit bei besonders einfacher Herstell- und Handhabbarkeit in besonders vorteilhafter Weise drei spezielle Funktionen auf sich vereinen:
- attraktives Wohn-, Rast- und Schutzangebot,
- effektive Fischereisperre und
- wirksamer Kolkschutz.

### BEZUGSZEICHENLISTE

- **01**: künstliches Habitat
- **02**: Vollkörper
- **03**: Seite von 02
- **04**: Standfläche von 02
- **05**: aquatischer Weichboden
- **06**: Hauptgang
- **07**: Oberfläche von 03
- **08**: Seitenkante von 02
- **09**: Schnittpunkt von 06
- **10**: Seitenschwerpunkt
- **11**: Einstiegshilfe
- **12**: Höhlung
- **13**: Nebengang
- **14**: Vertiefung
- **15**: Ecke von 02
- **16**: Öse
- **17**: Leine
- **18**: gerundeter Querschnitt von 06,13
- **19**: Verbindungsgang
- **20**: Schwerpunkt
- **21**: Tunnelsystem
- **23**: Fase
- **24**: Metallkante

- **B₁**: Breite von 06
- **B₂**: Breite von 13
- **L**: Länge von 08

## Patentansprüche

1. Künstliches Habitat (01) in Polyederform für Krebstiere auf aquatischen Weichböden (05) mit einer eigenständigen Standfähigkeit und strukturierten Oberflächen (07), wobei das künstliche Habitat (01) einen symmetrischen Vollkörper (02) in Tetraederform mit vier gleichen, jeweils eine mögliche Standfläche (04) auf dem Weichboden (05) bildenden Seiten (03) aufweist,
**GEKENNZEICHNET DURCH**
eine Anordnung in den Oberflächen (07) der Seiten (03) von jeweils drei rinnenförmigen Hauptgängen (06) mit einem Verlauf entlang der Seiten-halbierenden von der Seitenkante (08) bis zu einem gemeinsamen Schnittpunkt (09) im Seitenschwerpunkt (10).

2. Künstliches Habitat (01) nach Anspruch 1,
**GEKENNZEICHNET DURCH**
einen gerundeten Querschnitt (18) zumindest der Hauptgänge (06).

3. Künstliches Habitat (01) nach Anspruch 2,
**GEKENNZEICHNET DURCH**
eine Breite (B) der Hauptgänge (06) in einem Bereich von einem Viertel bis einem Fünftel der Länge (L) jeder Seitenkante (08).

4. Künstliches Habitat (01) nach zumindest einem der Ansprüche 1 bis 3,
**GEKENNZEICHNET DURCH**
eine halbschalenförmige Vertiefung (14) im Bereich des Schnittpunkts (09) der Hauptgänge (06).

5. Künstliches Habitat (01) nach zumindest einem der Ansprüche 1 bis 4,
**GEKENNZEICHNET DURCH**
tunnelartige Verbindungsgänge (19) im Inneren des Vollkörpers (02) zwischen den Schnittpunkten (09) der Hauptgänge (06) auf den vier Seiten (03) und dem
Schwerpunkt (20) des Vollkörpers (02).

6. Künstliches Habitat (01) nach zumindest einem der Ansprüche 1 bis 5,
**GEKENNZEICHNET DURCH**
rinnenförmige Nebengänge (13) in den Oberflächen (07) der vier Seiten (03) mit einer geringeren Breite (B) als die Hauptgänge (06).

7. Künstliches Habitat (01) nach zumindest einem der Ansprüche 1 bis 6,
**GEKENNZEICHNET DURCH**
**durch** eine Fase (23) und/oder eine Metallkante (24) entlang der Seitenkanten.

8. Künstliches Habitat (01) nach zumindest einem der Ansprüche 1 bis 7,
**GEKENNZEICHNET DURCH**
eine Ausführung des Vollkörpers (02) aus Beton.

9. Künstliches Habitat (01) nach zumindest einem der Ansprüche 1 bis 8,
**GEKENNZEICHNET DURCH**
Vorsehen einer Öse (16) an einer Ecke des Vollkörpers (02).

10. Anwendung des künstlichen Habitats (01) nach zumindest einem der Ansprüche 1 bis 9 als Fischereisperre und/oder Kolkschutz.

## Claims

1. An artificial habitat (01) in polyhedral form for crustaceans on soft aquatic beds (05), having the ability to stand independently and structured surfaces (07), wherein the artificial habitat (01) has a symmetrical solid body (02) in tetrahedral form having four equal sides (03), which each form a possible standing face (04) on the soft bed (05),
**characterised by**
an arrangement in the surfaces (07) of the sides (03) of in each case three channel-shaped main passages (06) having a profile along the bisector of the side from the side edge (08) to a common intersection (09) in the centre of gravity (10) of the side.

2. The artificial habitat (01) according to claim 1,
**characterised by**
a rounded cross section (18) of at least the main passages (06).

3. The artificial habitat (01) according to claim 2,
**characterised by**
a width (B) of the main passages (06) in a range from a quarter to a fifth of the length (L) of each side edge (08).

4. The artificial habitat (01) according to at least one of claims 1 to 3,
**characterised by**
a half-shell-shaped depression (14) in the region of the intersection (09) of the main passages (06).

5. The artificial habitat (01) according to at least one of claims 1 to 4,
**characterised by**
tunnel-like connecting passages (19) in the interior of the solid body (02) between the intersections (09) of the main passages (06) on the four sides (03) and the centre of gravity (20) of the solid body (02).

6. The artificial habitat (01) according to at least one of claims 1 to 5,
**characterised by**
channel-shaped secondary passages (13) in the surfaces (07) of the four sides (03), having a smaller width (B) than the main passages (06).

7. The artificial habitat (01) according to at least one of claims 1 to 6,
**characterised by**
a chamfer (23) and/or a metal edge (24) along the side edges.

8. The artificial habitat (01) according to at least one of claims 1 to 7,
**characterised by**
a configuration of the solid body (02) in concrete.

9. The artificial habitat (01) according to at least one of claims 1 to 8,
**characterised by**
provision of an eyelet (16) at a corner of the solid body (02).

10. The use of the artificial habitat (01) according to at least one of claims 1 to 9 as a fishery barrier and/or pothole prevention means.

## Revendications

1. Habitat artificiel (01) en forme de polyèdre pour crustacés sur des fonds aquatiques mous (05) avec une capacité de tenue autonome et des surfaces structurées (07), dans lequel l'habitat artificiel (01) présente un corps plein symétrique (02) en forme de tétraèdre, avec quatre côtés (03) formant respectivement une surface d'appui possible (04) sur le fond mou (05),
**caractérisé par**
un agencement de trois couloirs principaux (06) respectifs en forme de gouttières dans les surfaces (07) des côtés (03), avec une étendue le long des médianes des bords latéraux (08), jusqu'à un point d'intersection commun (09) dans le centre de gravité des côtés (10).

2. Habitat artificiel (01) selon la revendication 1,
**caractérisé par**
une section transversale arrondie (18) au moins pour les couloirs principaux (06).

3. Habitat artificiel (01) selon la revendication 2,
**caractérisé par**
une largeur (B) des couloirs principaux (06) mesurant entre un quart et un cinquième de la longueur (L) de chaque bord latéral (08).

4. Habitat artificiel (01) selon l'une au moins des revendications 1 à 3,
**caractérisé par**
un renfoncement en forme de demi-coque (14) dans la région du point d'intersection (09) des couloirs principaux (06).

5. Habitat artificiel (01) selon l'une au moins des revendications 1 à 4,
**caractérisé par**
des couloirs de liaison du genre tunnels (19) à l'intérieur du corps plein (02), entre les points d'intersection (09) des couloirs principaux (06) des quatre côtés (03) et le centre de gravité (20) du corps plein (02).

6. Habitat artificiel (01) selon l'une au moins des revendications 1 à 5,
**caractérisé par**
des couloirs annexes en forme de gouttières (13) dans les surfaces (07) des quatre côtés (03), avec une largeur (B) inférieure à celle des couloirs principaux (06).

7. Habitat artificiel (01) selon l'une au moins des revendications 1 à 6,
**caractérisé par**
un chanfrein (23) et/ou un bord métallique (24) le long des bords latéraux.

8. Habitat artificiel (01) selon l'une au moins des revendications 1 à 7,
**caractérisé par**
une réalisation du corps plein (02) en béton.

9. Habitat artificiel (01) selon l'une au moins des revendications 1 à 8,
**caractérisé par**
la création d'un oeillet (16) dans un coin du corps plein (02).

10. Utilisation de l'habitat artificiel (01) selon l'une au moins des revendications 1 à 9 comme barrage de pêche et/ou comme protection contre l'affouillement.
